# DEMANDE DE BREVET EUROPEEN

(11) **EP 0 855 407 A1**
(43) Date de publication de la demande: **29.07.1998**
(21) Numéro de dépôt: 98400074.5
(22) Date de dépôt: 16.01.1998
(51) Int. Cl.: C08F 2/10

(54) **Dispersions aqueuses à base de polymères hydrosolubles**

(30) Priorité: 24.01.1997 FR 9700782
(71) Demandeur: ELF ATOCHEM S.A., 92800 Puteaux, Hauts-de-Seine (FR)
(72) Inventeur: Tembou Nzudie, Denis M., 27470 Serquigny (FR); Vanhoye, Didier M., 60600 Breuil Le Vert (FR)

(57) **Abrégé**

On peut préparer des dispersions aqueuses à base de polymères hydrosolubles à concentration élevée et à faible viscosité par la polymérisation d'au moins un monomère hydrosoluble en présence d'un agent de dispersion polymérique. Ces dispersions aqueuses peuvent être utilisées comme floculants pour le traitement des eaux.

## Description

La présente invention se rapporte au domaine des dispersions eau dans eau et en particulier aux dispersions aqueuses à base de polymères hydrosolubles à concentration élevée et à faible viscosité.

Les dispersions aqueuses de polymères hydrosolubles sont utilisées pour différentes applications et en particulier comme floculants pour le traitement des eaux industrielles et urbaines, la déshydratation des boues, comme épaississant et agent de traitement des sols.

Il est connu que les systèmes aqueux de polymères hydrosolubles à haut extrait sec ont la forme d'un gel et présentent des viscosités très élevées, ceci rend leur manipulation et stockage difficiles. Le problème posé à l'homme du métier est la réalisation de tels systèmes aqueux mais ayant à la fois un extrait sec élevé et une faible viscosité. Il est aussi nécessaire que ces systèmes soient stables au stockage.

Le brevet US 5 403 883 décrit la polymérisation dans l'eau d'un mélange de monomères comprenant un ou plusieurs monomères hydrophiles ou un ou plusieurs monomères hydrophobes et éventuellement un ou plusieurs monomères amphiphiles. La polymérisation conduit à un polymère hydrosoluble de forte masse moléculaire en poids. L'opération se déroule en présence d'un polymère dispersant imcompatible avec le polymère hydrosoluble préparé. Le dispersant a une masse moyenne en poids inférieure à 500000. Un dispersant typique est le chlorure de polydiallydiméthylammonium, désigné ci-après par poly DADMAC.

Toutefois ce système de dispersions aqueuses se présente sous la forme d'un gel transparent ayant une viscosité relativement importante.

La demanderesse vient maintenant de trouver qu'en utilisant d'autres monomères hydrophiles ou d'autres dispersants on obtient des dispersions aqueuses de polymères hydrosolubles de faible viscosité et qui ne sont pas des gels. Ces dispersions peuvent se présenter sous forme d'une émulsion opaque.

Selon une première forme l'invention concerne un polymère hydrosoluble comprenant les motifs correspondant à :
- au moins un monomère hydrophile A1,
- éventuellement au moins un monomère amphiphile B,
- et éventuellement au moins un monomère hydrophobe C.

En présence d'un agent de dispersion polymérique incompatible avec le polymère hydrosoluble synthétisé comprenant des motifs vinyl aromatiques et des motifs anhydride d'acide dicarboxylique insaturé. Le dispersant est imidisé puis salifié ou quaternisé. Un dispersant typique selon cette forme de l'invention est le copolymère styrène/anhydride maleique imidisé puis salifié à l'aide de l'acide acétique, désigné ci-après par SMA+.

Selon une deuxième forme l'invention concerne un polymère hydrosoluble comprenant les motifs suivants :
- au moins un monomère hydrophile A choisi dans le groupe constitué d'au moins un monomère hydrophile A2 et éventuellement d'au moins un monomère hydrophile A1,
- éventuellement au moins un monomère amphiphile B,
- et éventuellement au moins un monomère hydrophobe C.

En présence d'un polymère dispersant D incompatible avec le polymère hydrosoluble.

Le monomère soluble dans l'eau A1 doit avoir au moins un groupe ionique. Il peut être choisi dans le groupe constitué par :
- les molécules répondant à la formule générale suivante : 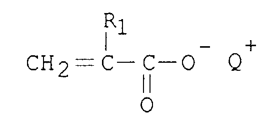 dans laquelle :
   R₁ représente un H ou un méthyl,
   Q est une charge positive représentant un ion métallique tel que Na⁺, K⁺ ou un ion d'ammonium NH4⁺,.....
- les molécules répondant à la formule générale suivante : 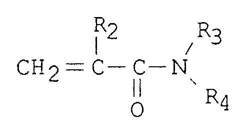 dans laquelle :
   R₂ représente un H ou un méthyl,
   R₃ et R₄ représentent séparément un H ou un alkyl ou un hydroxyalkyl en C1-6 ou un cycloalkyl en C5-12
- les molécules répondant à la formule générale suivante 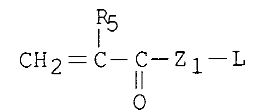 dans laquelle
   R₅ = H ou CH₃
   Z₁ = O,NH ou NR6 avec R6 un groupe alkyl ou hydroxyalkyl en C₁₋₆ 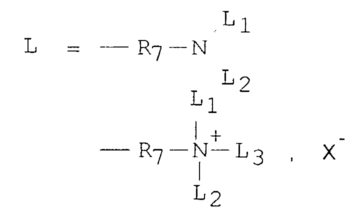
   ou R₇ = alkylène ou hydroxyalkylène en C₁₋₆ et L₁, L₂, L₃ représentent séparément un H ou un alkyl ou un hydroxyalkyl en C₁₋₆, un cycloalkyl en C₅₋₁₂, ou arylalkyl en C₆₋₁₂.

Le monomère A1 préféré selon l'invention est l'acrylamide.

Les monomères hydrosolubles A2 répondent à la formule générale suivante : 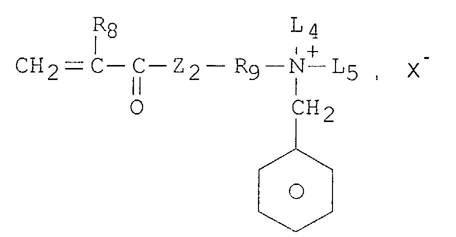 dans laquelle
R₈ = H ou méthyl
Z₂ = O, NH ou NR10 avec R10 = alkyl ou hydroxyalkyl en C₁₋₆ ou cycloalkyl en C₅₋₁₂
R9 = alkylène ou hydroxyalkylène en C₁₋₆
L4 et L5 = séparément alkyl ou hydroxyalkyl en C₁₋₁₂, cycloalkyl, en C₅₋₁₂, ou aryl en C₆₋₁₂
X est un ion tel que Cl, SCN...

Le monomère A2 préféré selon l'invention est le chlorure d'acryloxyéthyldiméthylbenzylammonium.

Les monomères amphiphiles peuvent être choisis dans le groupe constitué de :
- les molécules répondant à la formule générale suivante :
   R₁₂ et R₁₅ représentent séparément un alkylène ou hydroxyalkylène en C₁₋₆ ou un cycloalkylène en C₅₋₁₂. 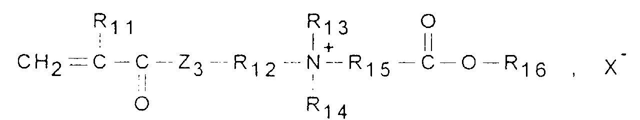 dans laquelle
   Z₃ représente O,NH ou NR17, R17 est un groupe alkyl ou cycloalkyl en C₁₋₄
   R₁₁ représente un H ou un méthyl
   R₁₃, R₁₄ et R₁₆ représentent séparément un alkyl ou hydroxyalkyl en C₁₋₆, ou un cycloalkyl en C₅₋₁₂
   X est un ion tel que Cl, SCN...
- les molécules repondant à la formule générale suivante : 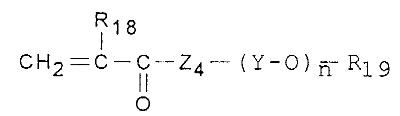 dans laquelle
   R₁₈, R₁₉ = H ou méthyl
   Z₄ = O, NH, NR₂₀ avec R₂₀ = alkyl ou hydroxyalkyl en C₁₋₆
   Y = alkyl en C₁₋₄·

Sont aussi considérées comme monomères amphiphiles :
- les molécules A2 dans lesquelles
   R₁₁ est en C₇₋₁₂
   L₄ et L₅ représentent séparément un alkyl,un hydroxyalkyl en C₁₋₁₂, un cycloalkyl ou un aryl en C₆₋₁₈.
- les molécules répondant à la formule générale 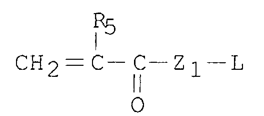 dans laquelle
   R₅ = H ou CH₃
   Z₁ = O, NH ou NR₆, R₆ = alkyl ou hydroxyalkyl en C₁ - C-₁₆ 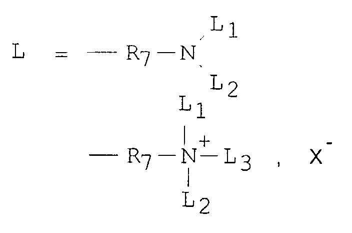
   avec R₇ = alkylène en C₆-C₈, L₁, L₂, L₃ alkyl en C₆-C₁₈ cycloalkyl en C₆-C₁₈ ou arylalkyl en C₉-C₁₈.

Les monomères hydrophobes peuvent être choisis dans le groupe constitué de :
- les molécules répondant à la formule générale suivante : 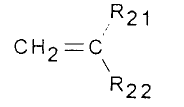 dans laquelle
   R₂₁ représente un H ou un groupe alkyl en C₁₋₉
   R₂₂ représente un groupe alkyl en C₁₋₄ cycloalkyl en C₅₋₁₂ ou aryl en C₆₋₁₂
- les molécules réoondant à la formule générale suivante : 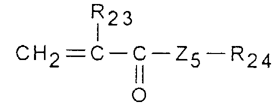 dans laquelle
   R₂₃ = H ou CH₃
   Z₅ représente un O, NH₃, ou NR₂₅ avec R₂₅ = alkyl en C₁₋₄
   R₂₄ représente un groupe alkyl en C₁₋₉ cycloalkyl en C₅₋₁₂ ou aryl en C₆₋₁₂.

Selon la première forme les dispersions de l'invention sont à base de polymères hydrosolubles contenant :
de 70 à 100 % en poids d'au moins un monomère hydrosoluble A1
de 0 à 30 % en poids d'au moins un monomère amphiphile B
de 0 à 30 % en poids d'au moins un monomère hydrophobe C en présence d'un dispersant polymérique contenant des motifs anhydride maléique imidisé puis salifié.

Selon la deuxième forme les dispersions sont à base de polymères hydrosolubles contenant :
de 70 à 100 % en poids d'au moins un monomère A2
de 0 à 30 % en poids d'au moins un monomère A1
de 0 à 30 % en poids d'au moins un monomère B
de 0 à 30 % en poids d'au moins un monomère C dispersés en présence d'un dispersant polymérique D tel que les polymères contenant de l'anhydride maléique imidisé puis neutralisé ou salifié ou le chlorure de polydiallyldiméthylammonium.

Le polymère dispersant D et le polymère hydrosoluble sont incompatibles. Ils ne doivent pas former un alliage quand ils sont mélangés ensemble. La masse moyenne en poids du polymère dispersant est de 500 à 500000 et de préférence de 1000 à 400000. Le polymère dispersant D doit avoir au moins un groupe fonctionnel choisi parmi les groupes suivants, éther, hydroxyl, carboxyl amine ammonium quaternaire imine,... Le dispersant peut être aussi tout copolymère contenant une des fonctions mentionnées précédemment. Il peut être tout copolymère contenant un des monomères suivants, les acides maléique, fumarique, itaconique ainsi que les anhydrides les imides les imides quaternisés correspondants. De même que l'acide(méth)acrylique et son sel, l'acrylamide ou le méthacrylamide.

Un dispersant typique D selon l'invention peut être le chlorure de polydiallyldimethylammonium, ci-après désigné (poly-DADMAC), ou encore le copolymère styrène-anhydride maleique imidisé et salifié par l'acide acétique, ci-après désigné par (SMA+).

La synthèse du polymère hydrosoluble peut être réalisée par les techniques de polymérisation connues de l'homme du métier. Le polymère hydrosoluble selon l'invention est préparé par la polymérisation radicalaire du mélange contenant au moins un monomère hydrosoluble, éventuellement le monomère amphiphile et éventuellement le monomère hydrophobe. En présence de 1 à 30 % et de préférence de 2 à 15% de polymère dispersant. Le mélange de monomère représente de 10 à 40 % et de préférence de 15 à 30 % du mélange eau monomères et dispersant. La polymérisation peut être amorcée par différents moyens, comme par les générateurs de radicaux libres tels que les peroxydes, les composés diazoiques ou les persulfates, ou par irradiation. Le mode préféré selon l'invention est l'initiation par le chlorure de 2,2' Azo bis (2-amidinopropane), désigné ci-après par (ABAH). Ces initiateurs peuvent être combinés avec un accélérateur de décomposition. La température de polymérisation est comprise en 0 et 100°C et de préférence entre 40 et 95°C. Le temps de polymérisation est de 8 heures. La conversion finale est supérieure à 95 %.

### Exemple 1.

Ce mode s'applique à tous les essais réalisés avec le SMA+ comme polymère dispersant.

Dans un réacteur de 1 litre on introduit 277 parts d'eau, 9,5 parts d'acide acétique et 52 parts de copolymère styrène/anhydride maleique imidisé. On porte le réacteur à 65°C pendant 30 minutes sous azote. Ensuite on introduit 89,5 parts d'une solution de chlorure d'acryloxylethyldiméthylbenzyl ammonium (QUAT BZ) à 80 % dans l'eau, 46,8 parts d'acrylamide (Acryl) à 50 % dans l'eau, 5 parts d'acrylate de butyle (ABu) et 0,01 part de ABAH dilué dans 5 parts d'eau. La température est maintenue à 65° pendant 2 heures. Ensuite on rajoute 0,1 part d'amorceur dilué dans 10 parts d'eau et on monte la température à 80°C. Après 1 heure et demi de réaction à 80° on rajoute 0,025 part d'amorceur dilué dans 5 parts d'eau. Après 1 heure et demi on renouvelle cette dernière opération et on maintient la température pendant 1 heure. Ensuite on refroidit à 30°C et on vide le réacteur.

### Exemples 2 et 3.

Identique à l'exemple 1 sauf qu'on remplace une partie du chlorure d'acryloxylethyldiméthylbenzyl ammonium (QUAT BZ) par le chlorure d'acryloxyléthyltriméthyl ammonium (QUAT MC).

### Exemple 4.

Identique à l'exemple 1 sauf qu'on réduit la quantité de polymère dispersant.

### Exemple 5.

Identique à l'exemple 1 sauf qu'on supprime le monomère hydrophobe.

Le tableau (1) résume ces essais.

### Exemple 6. (comparatif).

Dans un réacteur de 1 litre on introduit 201,3 parts d'eau, 171,3 parts d'une solution aqueuse de polyDADMAC à 35 %, 62,5 parts d'une solution de QUAT MC à 80 % dans l'eau, 5 parts d'acrylate de butyle et 45 parts d'arylamide.

Le mélange est porté à 65° C sous azote. Ensuite on introduit 0,01 part de ABAH dilué dans 5 parts d'eau. Après 3 heures de réaction, le mélange est porté à 80°C , on ajoute alors 0,1 part de ABAH dilué dans 10 parts d'eau et on laisse la réaction se poursuivre pendant 1 heure et demi. Ensuite le réacteur est refroidi à 30°C et vidé.

### Exemples 7 et 8.

Identiques à l'exemple comparatif 6 sauf qu'on remplace le QUAT MC par le QUAT BZ.

Le tableau (2) résume les essais 6, 7 et 8.

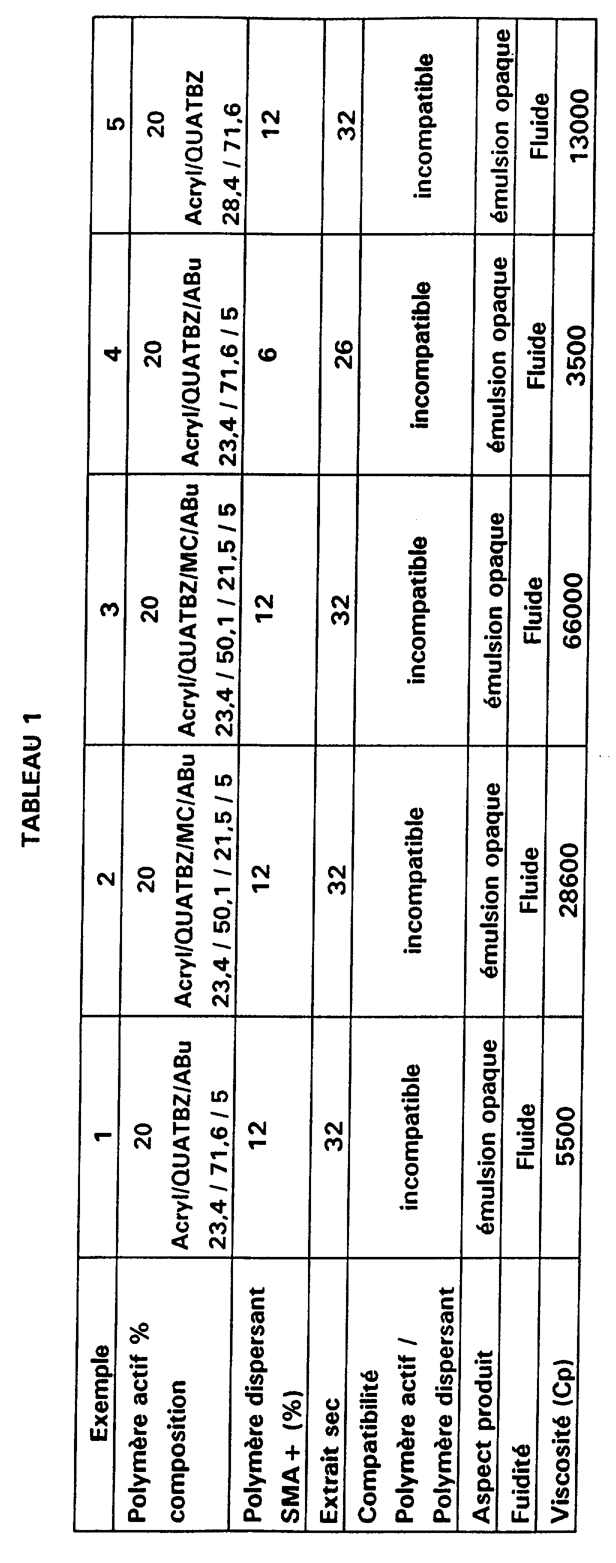

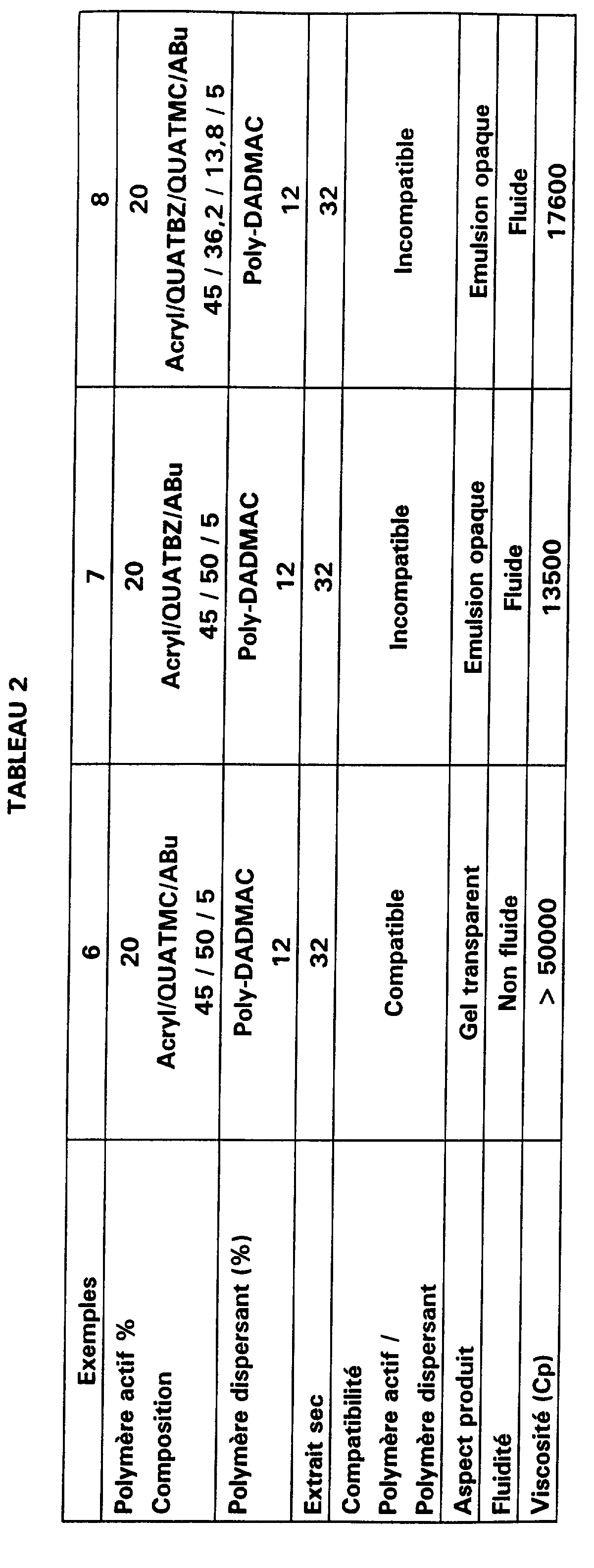

## Revendications

1. Composition hydrosoluble contenant un polymère hydrosoluble caractérisée en ce que le polymère hydrosoluble contient :
de 70 à 100 % en poids d'au moins un monomère hydrosoluble A1
de 0 à 30 % en poids d'au moins un monomère amphiphile B
de 0 à 30 % en poids d'au moins un monomère hydrophobe C en présence d'un copolymère styrène-anhydride maleique imidisé et salifié.

2. Composition hydrosoluble selon la revendication 1 caractérisée en ce que le monomère A1 soit choisi dans le groupe constitué par :
- les molécules répondant à la formule générale suivante : 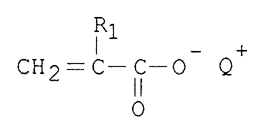 dans laquelle :
R₁ représente un H ou un méthyl,
Q est une charge positive représentant un ion métallique tel que Na⁺, K⁺ ou un ion d'ammonium NH4⁺,.....
- les molécules répondant à la formule générale suivante : 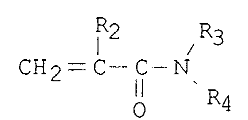 dans laquelle :
R₂ représente un H ou un méthyl,
R₃ et R₄ représentent séparément un H ou un alkyl ou un hydroxyalkyl en C1-6 ou un cycloalkyl en C5-12
- les molécules répondant à la formule générale suivante 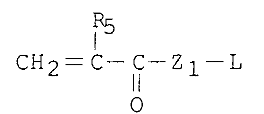 dans laquelle
R₅ = H ou CH3
Z₁ = O,NH ou NR6 avec R6 un groupe alkyl ou hydroxyalkyl en C1-6 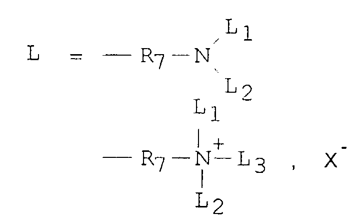
ou R₇ = alkylène ou hydroxyalkylène en C1-6 et L₁, L₂, L₃ représentent séparément un H ou un alkyl ou un hydroxyalkyl en C₁₋₆, un cycloalkyl en C₅₋₁₂, ou arylalkyl en C₆₋₁₂.

3. Composition hydrosoluble selon la revendication 1 ou 2 caractérisée en ce que le monomère B soit choisi dans le groupe constitué de :
- les molécules répondant à la formule générale suivante : 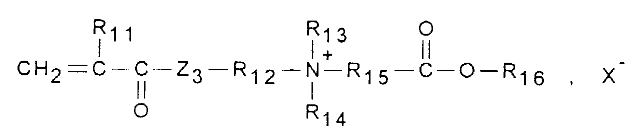 dans laquelle
Z₃ représente O,NH ou NR17, R17 est un groupe alkyl ou cycloalkyl en C1-4
R₁₁ représente un H ou un méthyl
R₁₂ et R₁₅ représentent séparément un alkylène ou hydroxyalkylène en C₁₋₆ ou un cycloalkylène en C₅₋₁₂
R₁₃, R₁₄ et R₁₆ représentent séparément un alkyl ou hydroxyalkyl en C₁₋₆, ou un cycloalkyl en C₅₋₁₂
X est un ion tel que Cl, SCN...
- les molécules repondant à la formule générale suivante : 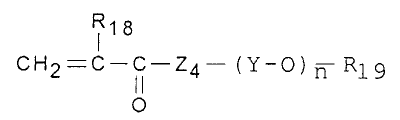 dans laquelle
R₁₈ = H ou méthyl
R₁₉ = H ou méthyl
Z₄ = O, NH, NR₂₀ avec R₂₀ = alkyl ou hydroxyalkyl en C₁₋₆
Y = alkylène en C₁₋₄·
n = nombre entier compris entre 1 et 8.

4. Composition hydrosoluble selon l'une quelconque des revendications précédentes caractérisée en ce que le monomère C soit choisi dans le groupe constitué de :
R₁₂ et R₁₅ représentent séparément un alkylène ou hydroxyalkylène en C₁₋₆ ou un cycloalkylène en C₅₋₁₂
- les molécules répondant à la formule générale suivante : 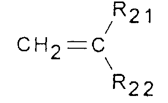 dans laquelle
R₂₁ représente un H ou un groupe alkyl en C₁₋₉
R₂₂ représente un groupe alkyl en C₁₋₄ cycloalkyl en C₅₋₁₂ ou aryl en C₆₋₁₂
- les molécules répondant à la formule générale suivante : 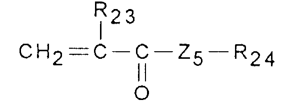 dans laquelle
R₂₃ = H ou CH₃
Z₅ représente un O, NH₃, ou NR₂₅ avec R₂₅ = alkyl en C₁₋₄
R₂₄ représente un groupe alkyl en C₁₋₉ cycloalkyl en C₅₋₁₂ ou aryl en C₆₋₁₂.

5. Composition hydrosoluble contenant un polymère hydrosoluble et un polymère dispersant caractérisée en ce que le polymère hydrosoluble contient :
de 70 à 100 % en poids d'au moins un monomère hydrosoluble A2 répondant à la formule : 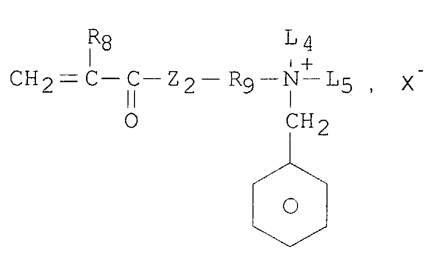 dans laquelle
R₈ = H ou méthyl
Z₂ = O, NH ou NR10 avec R10 = alkyl ou hydroxyalkyl en C₁₋₆ ou cycloalkyl en C₅₋₁₂
R9 = alkylène ou hydroxyalkylène en C₁₋₄
L4 et L5 = séparément alkyl ou hydroxyalkyl en C₁₋₆, cycloalkyl, en C₅₋₁₂, ou aryl en C₇₋₁₂
X est un ion tel que Cl, SCN.
de 0 à 30 % en poids d'au moins un monomère hydrosoluble A1
de 0 à 30 % d'au moins un monomère amphiphile B
de 0 à 30 % d'au moins un monomère hydrophobe C.

6. Composition hydrosoluble selon la revendication 5 caractérisée en ce que A2 est le chlorure d'acryloxyéthyldiméthylbenzylammonium.

7. Composition selon la revendication 5 ou la revendication 6 caractérisée en ce que le polymère dispersant soit le chlorure de polydiallyldiméthylammonium ou le copolymère styrène-anhydride maleique imidisé et salifié.

8. Composition selon une des revendications précédentes caractérisée en ce qu'elle contient de 10 à 40 % et de préférence de 15 à 30 % de polymère hydrosoluble.

9. Composition selon une des revendications précédentes caractérisée en ce qu'elle contient de 1 à 30 % et de préférence de 2 à 15 % de polymère dispersant.
